# EUROPEAN PATENT APPLICATION

(11) **EP 4 813 733 A1**
(43) Date of publication of application: **30.09.2026**
(21) Application number: 24902542.0
(22) Date of filing: 25.11.2024
(51) Int. Cl.: B60L 53/60

(54) **CHARGING DEVICE**

(30) Priority: 14.12.2023 CN 202311722982
(71) Applicant: Huawei Digital Power Technologies Co., Ltd., Shenzhen, Guangdong 518043 (CN)
(72) Inventor: LI, Fei, Shenzhen, Guangdong 518043 (CN); CAI, Yi, Shenzhen, Guangdong 518043 (CN); MIAO, Zhengping, Shenzhen, Guangdong 518043 (CN)
(74) Representative: Isarpatent
(86) International application number: PCT/CN2024/134257
(87) International publication number: WO 2025/124120

(57) **Abstract**

This application provides a charging device. The charging device includes a plurality of first charging cabinets, a plurality of AC-DC conversion modules, a direct current bus, and a plurality of sets of charging connectors. Each of the plurality of first charging cabinets includes one set of DC-DC conversion modules. An input end of each of the plurality of AC-DC conversion modules is configured to connect to an output end of a transformer, and both an output end of each AC-DC conversion module and an input end of each DC-DC conversion module in the set of DC-DC conversion modules are connected to the direct current bus. Output ends of the set of DC-DC conversion modules are connected to one of the plurality of sets of charging connectors, and each of the plurality of sets of charging connectors is configured to connect to a to-be-charged vehicle. According to this application, not only can the demand for higher power levels be met, but also charging utilization of the charging device can be improved.

## Description

This application claims priority to Chinese Patent Application No. 202311722982.0, filed with the China National Intellectual Property Administration on December 14, 2023 and entitled "CHARGING DEVICE", which is incorporated herein by reference in its entirety.

### TECHNICAL FIELD

This application relates to the field of power supply technologies, and in particular, to a charging device.

### BACKGROUND

With large-scale popularization of new energy vehicles, the demand for high-power supercharging systems of electric vehicles is also increasing. At present, a high-power direct-current charging system in the market is mainly in a form of one charging cabinet (namely, a charging stack) with a plurality of charging terminals. A total output power of one charging cabinet ranges from 240 kW to 960 kW, and there is a growing trend toward a higher power level.

In current applications, to achieve higher power levels (for example, 2 MW to 4 MW) for supercharging stations, a plurality of independent supercharging cabinets are usually deployed. Although the supercharging stations can meet the demand for higher power levels, power sharing between the plurality of charging cabinets is impossible because the plurality of charging cabinets are independent of each other. For example, in a case in which a previous-stage transformer corresponding to one charging cabinet A is capacity-limited while a previous-stage transformer corresponding to another charging cabinet B has surplus capacity, excess power of the charging cabinet B cannot be utilized, leading to reduced charging utilization.

In conclusion, it is particularly important to provide a charging device with a higher power level and higher charging utilization.

### SUMMARY

This application provides a charging device, which can not only meet the demand for higher power levels, but also can improve charging utilization of the charging device.

According to a first aspect, this application provides a charging device. The charging device includes a plurality of first charging cabinets, a plurality of AC-DC conversion modules, a direct current bus, and a plurality of sets of charging connectors. Each of the plurality of first charging cabinets includes one set of DC-DC conversion modules. An input end of each of the plurality of AC-DC conversion modules is configured to connect to an output end of a transformer, and both an output end of each AC-DC conversion module and an input end of each DC-DC conversion module in the set of DC-DC conversion modules are connected to the direct current bus. Output ends of the set of DC-DC conversion modules are connected to one of the plurality of sets of charging connectors, and each of the plurality of sets of charging connectors is configured to connect to a to-be-charged vehicle.

In this implementation, the charging device performs pooling on a power capability of the direct current bus in a manner in which all of the plurality of AC-DC conversion modules share the direct current bus with all DC-DC conversion modules in the plurality of first charging cabinets. In this way, when different AC-DC conversion modules in the charging device have different input limited powers and/or different first charging cabinets have different output powers, a power on the direct current bus may be flexibly allocated across the entire charging device, which can not only meet the demand for higher power levels of the charging device, but also can maximize charging utilization of the charging device.

With reference to the first aspect, in a first possible implementation, the AC-DC conversion module is configured to: when there is a common-mode circulating current in the AC-DC conversion module, generate a modulation wave of the AC-DC conversion module based on an actual common-mode circulating current value of the AC-DC conversion module, to reduce the common-mode circulating current of the AC-DC conversion module. The modulation wave is used to control a switching transistor in the AC-DC conversion module to be turned on or turned off.

In this implementation, because each AC-DC conversion module in the charging device reduces the actual common-mode circulating current of the AC-DC conversion module in such a low-frequency circulating current control manner, a low-frequency circulating current between the plurality of AC-DC conversion modules may be reduced, to improve efficiency, electromagnetic compatibility (EMC, namely, Electromagnetic Compatibility), and reliability of the charging device.

With reference to the first aspect or the first possible implementation of the first aspect, in a second possible implementation, the plurality of sets of AC-DC conversion modules include an AC-DC conversion module i. The AC-DC conversion module i is configured to send a control signal of the AC-DC conversion module i to other AC-DC conversion modules different from the AC-DC conversion module i in the plurality of AC-DC conversion modules. Each of the other AC-DC conversion modules is configured to: receive the control signal of the AC-DC conversion module i, and control a control signal of each of the other AC-DC conversion modules to be aligned with the control signal of the AC-DC conversion module i.

In this implementation, based on such a high-frequency circulating current control manner, the control signal of each of the other AC-DC conversion modules may be aligned with the control signal of the AC-DC conversion module i, to reduce a high-frequency circulating current between the plurality of AC-DC conversion modules, and improve efficiency, EMC, and reliability of the charging device.

With reference to any one of the first aspect to the second possible implementation of the first aspect, in a third possible implementation, the AC-DC conversion module is configured to control a ratio of an output power to a rated power of the AC-DC conversion module i to be a first ratio. The first ratio is a ratio of an actual total output power to a total rated power of the plurality of AC-DC conversion modules.

In this implementation, the charging device may enable an output power of each AC-DC conversion module to be proportionally output based on a rated power of each AC-DC conversion module in a proportional current equalization control manner of each AC-DC conversion module. This ensures that an AC-DC conversion module with a high rated power outputs a larger power, and an AC-DC conversion module with a low rated power outputs a smaller power, thereby prolonging a service life of each AC-DC conversion module and improving reliability of the charging device.

With reference to any one of the first aspect to the third possible implementation of the first aspect, in a fourth possible implementation, a product of a total input power capacity of the charging device and an actual operating efficiency of the charging device is greater than or equal to a total output power of the plurality of sets of charging connectors. The total input power capacity of the charging device is a smaller value between a sum of maximum input powers of the plurality of AC-DC conversion modules and a total rated power of transformers connected to the plurality of AC-DC conversion modules, and the actual operating efficiency of the charging device is a ratio of the total output power of the plurality of sets of charging connectors to a total input power of the charging device.

In this implementation, the product of the total input power capacity of the charging device and the actual operating efficiency of the charging device is greater than or equal to the total output power of the plurality of sets of charging connectors, so that a total output power capacity of the charging device (namely, a maximum total output power of the charging device) is greater than or equal to the total output power of the plurality of sets of charging connectors. This can avoid a case in which the charging device stops operating due to an inability to meet the total output power of the plurality of sets of charging connectors when the total output power of the plurality of sets of charging connectors is excessively large, thereby improving reliability of the charging device.

With reference to any one of the second possible implementation of the first aspect to the fourth possible implementation of the first aspect, in a fifth possible implementation, the charging device further includes a parallel communication line, and each AC-DC conversion module is connected to the parallel communication line. The parallel communication line is configured to transmit a rated power or an actual output power of any AC-DC conversion module in the plurality of AC-DC conversion modules.

In this implementation, the charging device disposes the parallel communication line between the AC-DC conversion modules, to facilitate subsequent implementation of proportional current equalization control between all the AC-DC conversion modules in the charging device, thereby improving working efficiency of the charging device.

With reference to the fifth possible implementation of the first aspect, in a sixth possible implementation, the charging device further includes a carrier synchronization line or a power-frequency synchronization line, and each AC-DC conversion module is connected to the carrier synchronization line or the power-frequency synchronization line. The carrier synchronization line is configured to transmit the control signal of the AC-DC conversion module i, and the power-frequency synchronization line is configured to transmit input voltage phase information of the any AC-DC conversion module.

In this implementation, when circuit topologies of the AC-DC conversion modules in the charging device are of a non-isolated type, carrier synchronization lines or power-frequency synchronization lines are further disposed between the AC-DC conversion modules in the charging device, to facilitate subsequent implementation of functions such as high-frequency carrier synchronization, power-frequency phase detection and synchronization, and low-frequency circulating current control between all the AC-DC conversion modules in the charging device. This implements circulating current control between all the AC-DC conversion modules in the charging device, and reduces both high-frequency and low-frequency circulating currents between parallel machines, thereby improving efficiency, EMC, and reliability of the charging device.

With reference to any one of the first aspect to the sixth possible implementation of the first aspect, in a seventh possible implementation, the plurality of AC-DC conversion modules include N sets of AC-DC conversion modules, a quantity of the plurality of first charging cabinets is N, and each first charging cabinet further includes one set of AC-DC conversion modules.

In this implementation, the charging device includes N first charging cabinets, and each first charging cabinet includes one set of AC-DC conversion modules and one set of DC-DC conversion modules. The first charging cabinet in this implementation is a direct current charging cabinet, and the charging device may be used in a discrete direct current charging pile system.

With reference to any one of the first aspect to the sixth possible implementation of the first aspect, in an eighth possible implementation, the plurality of AC-DC conversion modules include M sets of AC-DC conversion modules, the charging device further includes M second charging cabinets, and each of the M second charging cabinets includes one set of AC-DC conversion modules.

In this implementation, one set of AC-DC conversion modules is located in one second charging cabinet, and one set of DC-DC conversion modules is located in one first charging cabinet. The charging cabinet has various structures, so that the charging device has various structures and has high flexibility.

With reference to the seventh possible implementation of the first aspect or the eighth possible implementation of the first aspect, in a ninth possible implementation, each first charging cabinet further includes a controller, one set of charging connectors connected to each first charging cabinet includes a plurality of charging connectors, and one set of DC-DC conversion modules in each first charging cabinet includes a plurality of DC-DC conversion modules. The controller is configured to: in response to the total rated power of the plurality of AC-DC conversion modules being less than or equal to a total charging power required by to-be-charged vehicles connected to the plurality of charging connectors, control an output power of one DC-DC conversion module corresponding to each first charging connector or a total output power of the plurality of DC-DC conversion modules to be a product of a charging power required by a to-be-charged vehicle connected to each first charging connector and a power attenuation coefficient. The first charging connector is a charging connector that is in the plurality of charging connectors and that is connected to the to-be-charged vehicle, and the power attenuation coefficient is less than or equal to a ratio of the total rated power to the total charging power.

In this implementation, when a total rated power of all the AC-DC conversion modules in the charging device is less than or equal to a total charging power of all to-be-charged vehicles connected to the charging connectors in the charging device, a proportional part of a charging power required by the to-be-charged vehicles is output to the to-be-charged vehicles connected to the charging connectors. This avoid a case in which an individual to-be-charged vehicle connected to the charging connector cannot be charged, thereby ensuring that each to-be-charged vehicle connected to the charging connector can be in a charging state, to improve charging experience of a user. In addition, the charging device outputs, to each to-be-charged vehicle connected to the charging connector, a proportional part of a charging power required by the to-be-charged vehicle, so that it can be ensured that when the charging device charges the to-be-charged vehicle, a power input to the direct current bus is always greater than or equal to a power output by the direct current bus, thereby further improving reliability of the charging device.

With reference to the seventh possible implementation of the first aspect or the eighth possible implementation of the first aspect, in a tenth possible implementation, each first charging cabinet further includes a controller, one set of charging connectors connected to each first charging cabinet includes a plurality of charging connectors, and one set of DC-DC conversion modules in each first charging cabinet includes a plurality of DC-DC conversion modules. The controller is configured to: in response to the total rated power of the plurality of AC-DC conversion modules being greater than a total charging power required by to-be-charged vehicles connected to the plurality of charging connectors, control an output power of one DC-DC conversion module corresponding to each first charging connector or a total output power of the plurality of DC-DC conversion modules to be a charging power required by a to-be-charged vehicle connected to each first charging connector. The first charging connector is a charging connector that is in the plurality of charging connectors and that is connected to the to-be-charged vehicle.

In this implementation, when a total rated power of all the AC-DC conversion modules in the charging device is greater than a total charging power of all to-be-charged vehicles connected to the charging connectors in the charging device, a charging power required by each to-be-charged vehicle is output to each to-be-charged vehicle connected to the charging connector, so that efficiency of charging each to-be-charged vehicle by the charging device can be effectively improved, thereby improving charging experience of the user. In addition, a power input to the direct current bus is always greater than or equal to a power output by the direct current bus, which can further improve reliability of the charging device.

### BRIEF DESCRIPTION OF DRAWINGS

FIG. 1 is a diagram of an application scenario of a charging device according to this application;
FIG. 2 is a diagram of a structure of a charging device according to this application;
FIG. 3 is a diagram of another structure of a charging device according to this application;
FIG. 4 is a diagram of a common-mode circulating current according to this application;
FIG. 5 is a diagram of control logic of a common-mode circulating current according to this application; and
FIG. 6 is a diagram of still another structure of a charging device according to this application.

### DESCRIPTION OF EMBODIMENTS

A charging device provided in this application is applicable to a plurality of application fields such as new energy electric vehicles, photovoltaic power generation, and energy storage power generation. The charging device provided in this application is applicable to various application scenarios, for example, a power supply scenario for electric vehicles (including a power supply scenario for discrete direct current charging piles and a power supply scenario for high-power supercharging stations), a power supply scenario for photovoltaic charging (namely, a power supply scenario in which a photovoltaic system is integrated on the charging device), a power supply scenario for energy storage charging (namely, a power supply scenario in which an energy storage system is integrated on the charging device), and a power supply scenario for photovoltaic and energy storage charging (namely, a power supply scenario in which a photovoltaic system and an energy storage system are integrated on the charging device). The following uses the power supply scenario for electric vehicles as an example for description.

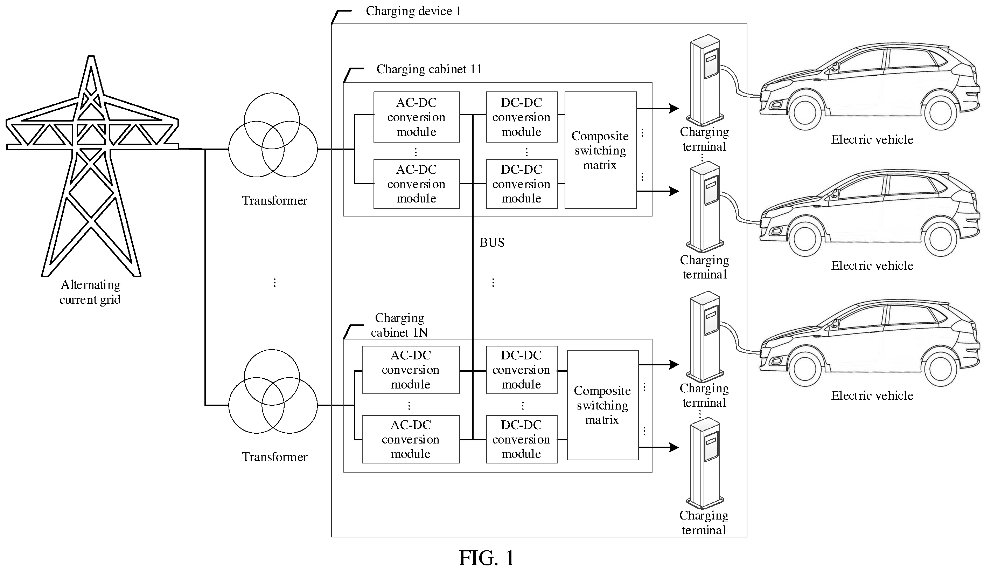

FIG. 1 is a diagram of an application scenario of a charging device according to this application. In a power supply scenario for electric vehicles, the charging device provided in this application may be a charging device 1 shown in FIG. 1. The charging device includes a plurality of first charging cabinets, a plurality of AC-DC conversion modules, a direct current bus, and a plurality of sets of charging connectors. Each of the plurality of first charging cabinets includes one set of DC-DC conversion modules. The plurality of first charging cabinets provided in this application are a total of N charging cabinets from a charging cabinet 11 to a charging cabinet 1N shown in FIG. 1, and N is an integer greater than 1. The plurality of AC-DC conversion modules provided in this application are all AC-DC conversion modules in the charging device 1 shown in FIG. 1. The direct current bus provided in this application is a direct current bus BUS shown in FIG. 1. One set of charging connectors provided in this application are charging connectors of all charging terminals connected to any charging cabinet shown in FIG. 1. The plurality of sets of charging connectors provided in this application are charging connectors of all charging terminals connected to the N charging cabinets shown in FIG. 1. One set of DC-DC conversion modules provided in this application is all DC-DC conversion modules in any charging cabinet shown in FIG. 1. Each charging cabinet further includes a composite switching matrix.

An input end of each AC-DC conversion module in the charging cabinet 11 is connected to an output end of a transformer through an input end of the charging cabinet 11, an output end of each AC-DC conversion module in the charging cabinet 11 and an input end of each DC-DC conversion module are both connected to the direct current bus BUS, and an output end of each DC-DC conversion module in the charging cabinet 11 is connected to an output end of the charging cabinet 11 by using the composite switching matrix in the charging cabinet 11... An input end of each AC-DC conversion module in the charging cabinet 1N is connected to an output end of a transformer through an input end of the charging cabinet 1N, an output end of each AC-DC conversion module in the charging cabinet 1N and an input end of each DC-DC conversion module are both connected to the direct current bus BUS, and an output end of each DC-DC conversion module in the charging cabinet 1N is connected to an output end of the charging cabinet 1N by using the composite switching matrix in the charging cabinet 1N... An output end of each of the N charging cabinets is connected to an electric vehicle by using the plurality of charging connectors of the plurality of charging terminals. Input ends of N transformers connected to the N charging cabinets are all connected to an alternating current grid.

After the charging device 1 starts operating, each of the N transformers steps down alternating current power from the alternating current grid and outputs the alternating current power to an input end of a charging cabinet respectively connected to the transformer. Each of the N charging cabinets performs rectification on the alternating current power at its input end by using a plurality of AC-DC conversion modules of the charging cabinet, and then outputs rectified alternating current power to the direct current bus BUS. Each charging cabinet controls an action of a switch in the composite switching matrix based on a charging power that needs to be output to a to-be-charged electric vehicle, and controls an output power of a DC-DC conversion module that is connected to a turned-on switch in the composite switching matrix, to meet a charging requirement of the to-be-charged electric vehicle corresponding to each charging cabinet.

It may be understood that the charging device 1 performs pooling on a power capability of the direct current bus BUS in a manner in which the N charging cabinets share the direct current bus BUS. In this way, when different charging cabinets in the charging device 1 have different input limited powers and/or different output powers, a power on the direct current bus BUS may be flexibly allocated across the entire charging device, which can not only meet the demand for higher power levels of the charging device 1, but also can maximize charging utilization of the charging device 1. The foregoing is merely an example of an application scenario of the charging device provided in this application, but is not exhaustive. The application scenario is not limited in this application.

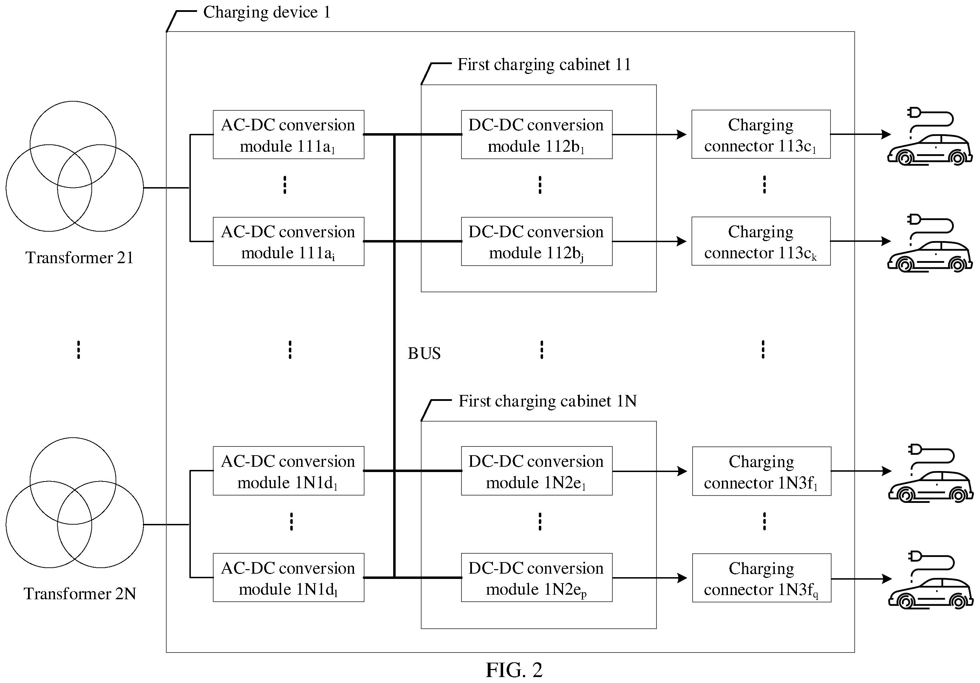

The following provides an example description of an operating principle of the charging device provided in this application with reference to FIG. 2 to FIG. 6.

FIG. 2 is a diagram of a structure of the charging device according to this application. As shown in FIG. 2, the charging device 1 includes N first charging cabinets, Q AC-DC conversion modules, a direct current bus BUS, and N sets of charging connectors, where both N and Q are integers greater than 1. The N first charging cabinets correspond to a first charging cabinet 11, ..., and a first charging cabinet 1N shown in FIG. 2. The Q AC-DC conversion modules include an AC-DC conversion module 111a₁, ..., an AC-DC conversion module 111aᵢ, ..., an AC-DC conversion module 1N1d₁, ..., and an AC-DC conversion module 1N1dₗ. The N sets of charging connectors include a first set of charging connectors, ..., and an N^{th} set of charging connectors. A charging connector 113c₁, ..., and a charging connector 113cₖ shown in FIG. 2 constitute the first set of charging connectors; ...; and a charging connector 1N3f₁, ..., and a charging connector 1N3f_{q} shown in FIG. 2 constitute the N^{th} set of charging connectors. Each of the N first charging cabinets includes one set of DC-DC conversion modules. Specifically, a first charging cabinet 11 includes a first set of DC-DC conversion modules including a DC-DC conversion module 112b₁, ..., and a DC-DC conversion modules 112bⱼ; ...; and a first charging cabinet 1N includes an N^{th} set of DC-DC conversion modules including a DC-DC conversion module 1N2e₁, ..., and a DC-DC conversion module 1N2eₚ. The direct current bus BUS provided in this application is a high-voltage direct current bus. For example, a voltage value of the direct current bus BUS is 800 V. Herein, i, j, k, l, p, and q are all integers greater than 1, and a value relationship between any two of i, j, k, l, p, and q is not limited in this application.

An input end of each of the Q AC-DC conversion modules is configured to connect to an output end of the transformer. Specifically, an input end of the AC-DC conversion module 111a₁, ..., and an input end of the AC-DC conversion module 111aᵢ are all connected to an output end of a transformer 21; ...; and an input end of the AC-DC conversion module 1N1d₁, ..., and an input end of the AC-DC conversion module 1N1dₗ are all connected to an output end of a transformer 2N. An input end of the transformer 21, ..., and an input end of the transformer 2N are all connected to the alternating current grid. An output end of each of the Q AC-DC conversion modules, input ends of j DC-DC conversion modules in the first set of DC-DC conversion modules, ..., and input ends of p DC-DC conversion modules in the N^{th} set of DC-DC conversion modules are all connected to the direct current bus BUS. Output ends of one set of DC-DC conversion modules in each first charging cabinet are connected to one set of charging connectors in the N sets of charging connectors. Specifically, output ends of j DC-DC conversion modules in the first set of DC-DC conversion modules are connected to k charging connectors in the first set of charging connectors in a manner of connecting to input ends of charging terminals in which the first set of charging connectors is located; ...; and output ends of p DC-DC conversion modules in the N^{th} set of DC-DC conversion modules are connected to q charging connectors in the N^{th} set of charging connectors in a manner of connecting to input ends of charging terminals in which the N^{th} set of charging connectors is located. Charging connectors in each set of charging connectors are configured to connect to a to-be-charged vehicle.

It should be noted that, in this application, that A is connected to B may be that A is directly connected to B or A is indirectly connected to B through C. This is not limited in this application. In addition, rated powers of the N transformers may be the same or may be different. The charging device 1 provided in this application imposes no limitation on a value between a rated power of the AC-DC conversion module and a rated power of the DC-DC conversion module.

In this embodiment of this application, the charging device 1 performs pooling on a power capability of the direct current bus BUS in a manner in which all AC-DC conversion modules share the direct current bus BUS with all DC-DC conversion modules in the N first charging cabinets. In this way, when different AC-DC conversion modules in the charging device 1 have different input limited powers and/or different first charging cabinets have different output powers, a power on the direct current bus BUS may be flexibly allocated across the entire charging device, which can not only meet the demand for higher power levels of the charging device 1, but also can maximize charging utilization of the charging device 1.

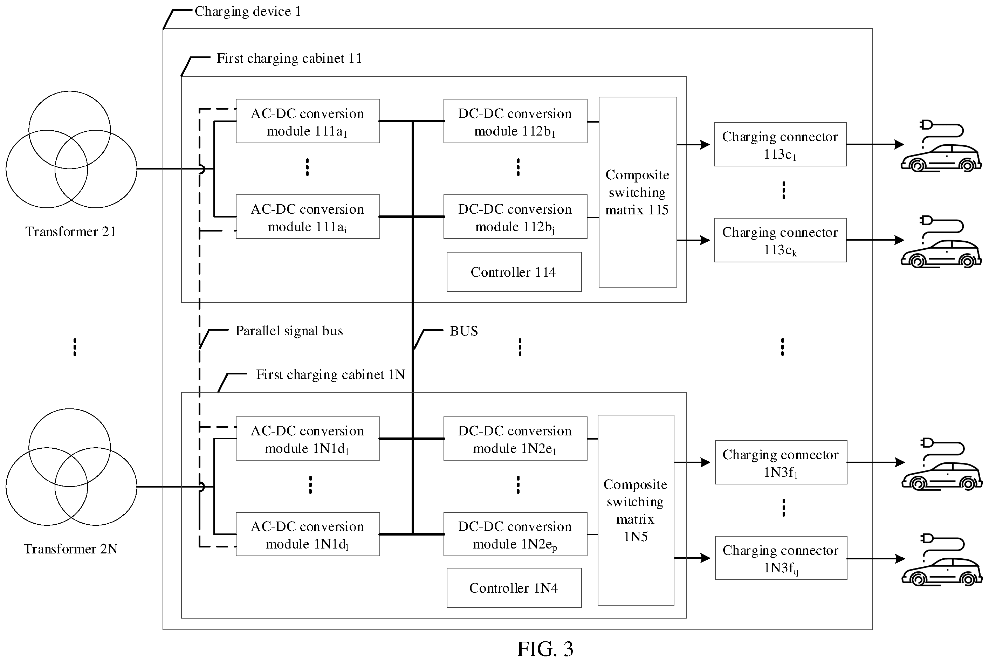

For example, FIG. 3 is a diagram of another structure of the charging device according to this application. As shown in FIG. 3, in comparison with the charging device 1 shown in FIG. 2, Q AC-DC conversion modules in a charging device 1 shown in FIG. 3 are divided into N sets of AC-DC conversion modules, and each first charging cabinet further includes one set of AC-DC conversion modules, a controller, and a composite switching matrix. Specifically, as shown in FIG. 3, a first charging cabinet 11 further includes a first set of AC-DC conversion modules, a controller 114, and a composite switching matrix 115, ..., and a first charging cabinet 1N further includes an N^{th} set of AC-DC conversion modules, a controller 1N4, and a composite switching matrix 1N5. The first set of AC-DC conversion modules includes an AC-DC conversion module 111a₁, ..., and an AC-DC conversion module 111aᵢ, and input ends of i AC-DC conversion modules in the first set of AC-DC conversion modules are connected to an output end of a transformer 21 through an input end of the first charging cabinet 11; ...; and the N^{th} set of AC-DC conversion modules includes an AC-DC conversion module 1N1d₁, ..., and an AC-DC conversion module 1N1dₗ, and input ends of l AC-DC conversion modules in the N^{th} set of AC-DC conversion modules are connected to an output end of a transformer 2N through an input end of the first charging cabinet 1N. Controllers of the controller 114, ..., and the controller 1N4 establish a communication connection to each other in a wired manner (for example, a CAN bus) or a wireless manner (for example, 4G or Wi-Fi), to facilitate scheduling and control of a total input power and a total output power of the charging device 1. Herein, the controllers in this application are all energy management systems (Energy Management System, EMS). j DC-DC conversion modules in a first set of DC-DC conversion modules are connected to an output end of the first charging cabinet 11 through the composite switching matrix 115, and the output end of the first charging cabinet 11 is connected to k charging connectors in a first set of charging connectors in a manner of connecting to charging terminals in which the first set of charging connectors is located; ...; and p DC-DC conversion modules in an N^{th} set of DC-DC conversion modules are connected to an output end of the first charging cabinet 1N through the composite switching matrix 1N5, and the output end of the first charging cabinet 1N is connected to q charging connectors in an N^{th} set of charging connectors in a manner of connecting to charging terminals in which the N^{th} set of charging connectors is located. Optionally, N first charging cabinets may be connected to a same transformer. Optionally, one of the N first charging cabinets may be connected to a plurality of transformers. Optionally, a plurality of DC-DC conversion modules in each first charging cabinet may be further connected to an output end of each first charging cabinet in a fixed switching manner.

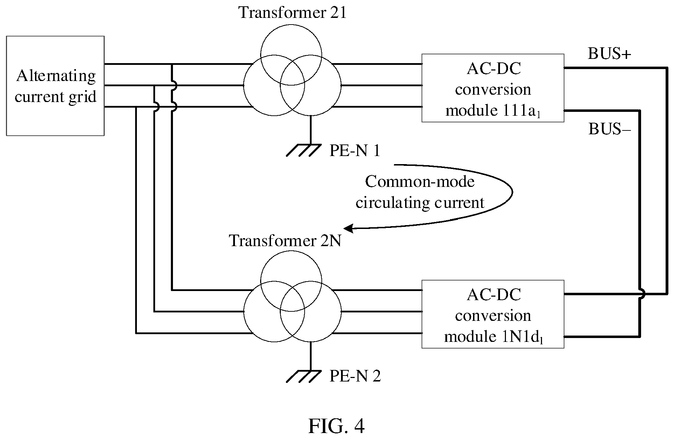

Input ends of different first charging cabinets are connected to different transformers, and input ends of the different transformers are all connected to an alternating current grid. In addition, outputs of different transformers have a phase difference, and AC-DC conversion modules in the charging device 1 share a direct current bus BUS. Therefore, when circuit topologies of the AC-DC conversion modules in the charging device 1 are all of a non-isolated type and N wires of the different transformers are connected a common grounding network, a common-mode circulating current shown in FIG. 4 occurs. The common-mode circulating current includes a low-frequency circulating current or a high-frequency circulating current. Based on this, when the circuit topologies of the AC-DC conversion modules in the charging device 1 are all of the non-isolated type, the charging device 1 shown in FIG. 3 further provides a parallel signal bus, and each AC-DC conversion module in the charging device 1 is connected to the parallel signal bus. The parallel signal bus includes but is not limited to a signal line such as a carrier synchronization line or a power-frequency synchronization line. The carrier synchronization line is configured to transmit a control signal from a primary module in the Q AC-DC conversion modules, to cooperate to implement switching signal synchronization between the AC-DC conversion modules in the charging device 1, thereby implementing high-frequency circulating current control between different first charging cabinets. The power-frequency synchronization line is configured to transmit input voltage phase information of any AC-DC conversion module in the charging device 1. In addition, regardless of whether a circuit topology of each AC-DC conversion module is of an isolated type or of the non-isolated type, the parallel signal bus always includes a parallel communication line. The parallel communication line is configured to transmit a rated power or an actual output power of any AC-DC conversion module in the charging device 1, to implement proportional current equalization control between the AC-DC conversion modules in the charging device 1. It should be noted that, when the circuit topologies of the AC-DC conversion modules in the charging device 1 are all of the isolated type, no common-mode circulating current exists between different first charging cabinets. Therefore, when the circuit topologies of the AC-DC conversion modules in the charging device 1 are of the isolated type, no carrier synchronization line or power-frequency synchronization line may be disposed in the parallel signal bus.

In an implementation, a low-frequency circulating current control manner of the charging device 1 is as follows: After the charging device 1 operates, each AC-DC conversion module in the charging device 1 generates a modulation wave of the AC-DC conversion module based on an actual common-mode circulating current value of the AC-DC conversion module when a common-mode circulating current exists, to reduce the common-mode circulating current of the AC-DC conversion module. Low-frequency circulating current control manners of the AC-DC conversion modules in the charging device 1 are consistent. Therefore, for ease of description, the following uses the AC-DC conversion module 111a₁ as an example for description.

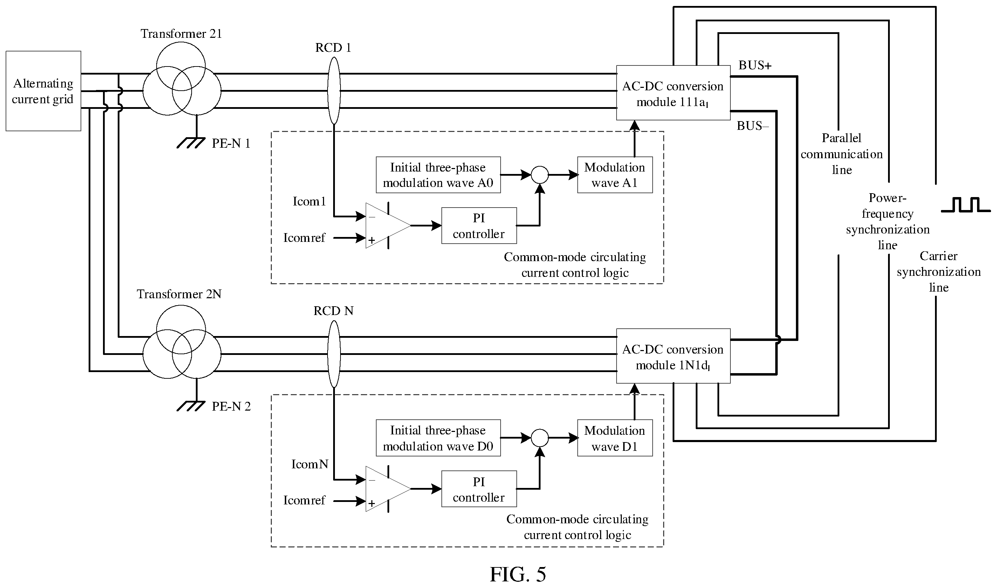

Specifically, FIG. 5 is a diagram of control logic of the common-mode circulating current according to this application. As shown in FIG. 5, after the charging device 1 operates, the AC-DC conversion module 111a₁ obtains an actual common-mode circulating current Icom1 of the AC-DC conversion module 111a₁ by summing three-phase input currents of the AC-DC conversion module 111a₁, or obtains the actual common-mode circulating current Icom1 of the AC-DC conversion module 111a₁ by using a residual current detection apparatus RCD 1. In addition, when the actual common-mode circulating current value Icom1 of the AC-DC conversion module 111a₁ is not 0, it indicates that the AC-DC conversion module 111a₁ has a common-mode circulating current. In this case, a PI controller processes a deviation between the actual common-mode circulating current value Icom1 of the AC-DC conversion module 111a₁ and a target common-mode circulating current value Icomref, to obtain a common-mode circulating current modulation voltage of the AC-DC conversion module 111a₁. The common-mode circulating current modulation voltage of the AC-DC conversion module 111a₁ is then superimposed onto an initial three-phase modulation wave A0 of the AC-DC conversion module 111a₁, to obtain a modulation wave A1 of the AC-DC conversion module 111a₁. The initial three-phase modulation wave A0 of the AC-DC conversion module 111a₁ may be a modulation wave generated based on a reference output voltage of the AC-DC conversion module 111a₁. For example, the target common-mode circulating current value Icomref is 0. Then, the AC-DC conversion module 111a₁ outputs the modulation wave A1 to a controllable switching transistor of the AC-DC conversion module 111a₁, to reduce the deviation between the actual common-mode circulating current value of the AC-DC conversion module 111a₁ and the target common-mode circulating current value, that is, reduce the common-mode circulating current of the AC-DC conversion module 111a₁. Because each AC-DC conversion module in the charging device 1 reduces the actual common-mode circulating current of the AC-DC conversion module in such a low-frequency circulating current control manner, a low-frequency circulating current between the N first charging cabinets may be reduced, to improve efficiency, EMC, and reliability of the charging device 1.

In an implementation, all AC-DC conversion modules in the charging device 1 include an AC-DC conversion module 1N1d₁ and other AC-DC conversion modules different from the AC-DC conversion module 1N1d₁. The AC-DC conversion module 1N1d₁ is a primary module of the AC-DC conversion module in the charging device 1. The other AC-DC conversion modules different from the AC-DC conversion module 1N1d₁ are secondary modules of the AC-DC conversion module 1N1d₁.

A high-frequency circulating current control manner of the charging device 1 is as follows: After the charging device 1 operates, the AC-DC conversion module 1N1d₁ sends a control signal of the AC-DC conversion module 1N1d₁ to each of the other AC-DC conversion modules by using a carrier synchronization line. Each of the other AC-DC conversion modules receives the control signal of the AC-DC conversion module 1N1d₁ by using the carrier synchronization line, and controls a control signal of each of the other AC-DC conversion module to be aligned with the control signal of the AC-DC conversion module 1N1d₁, to implement high-frequency circulating current control between different AC-DC conversion modules. High-frequency circulating current control manners of AC-DC conversion modules in the foregoing other first power conversion are consistent. Therefore, for ease of description, the following uses the AC-DC conversion module 111a₁ as an example for description.

Specifically, as shown in FIG. 5, after the charging device 1 operates, the AC-DC conversion module 111a₁ receives the control signal of the AC-DC conversion module 1N1d₁ by using the carrier synchronization line, and controls a rising edge of the control signal of the AC-DC conversion module 111a₁ to be aligned with a rising edge of the control signal of the AC-DC conversion module 1N1d₁, to align the control signal of the AC-DC conversion module 111a₁ with the control signal of the AC-DC conversion module 1N1d₁. Based on such a high-frequency circulating current control manner, the control signal of each of the other AC-DC conversion modules may be aligned with the control signal of the AC-DC conversion module 1N1d₁, to reduce a high-frequency circulating current between the N first charging cabinets, and improve efficiency, EMC, and reliability of the charging device 1.

In an implementation, a proportional current equalization control manner of each AC-DC conversion module in the charging device 1 is as follows: After the charging device 1 operates, each AC-DC conversion module in the charging device 1 obtains, by using the parallel communication line, rated powers and actual output powers of other AC-DC conversion module different from the AC-DC conversion module itself, and determines a ratio of an actual total output power to a total rated power of all AC-DC conversion modules in the charging device 1 as a first ratio, to control an output power of the AC-DC conversion module to be a product of a rated power of the AC-DC conversion module and the first ratio, thereby implementing proportional current equalization control on the AC-DC conversion modules. In this application, the AC-DC conversion modules may have same or different rated powers.

For example, assuming that N=i=l=2, that is, the charging device 1 includes a first charging cabinet 11 and a first charging cabinet 12, the first charging cabinet 11 includes an AC-DC conversion module 111a₁ and an AC-DC conversion module 111a₂, and the first charging cabinet 12 includes an AC-DC conversion module 121d₁ and an AC-DC conversion module 121d₂. A rated power and an actual output power of the AC-DC conversion module 111a₁ are respectively 100 kW and 80 kW, and a rated power and an actual output power of the AC-DC conversion module 111a₂ are respectively 150 kW and 100 kW. A rated power and an actual output power of the AC-DC conversion module 121d₁ are respectively 150 kW and 120 kW, and a rated power and an actual output power of the AC-DC conversion module 121d₂ are respectively 100 kW and 80 kW. In this case, a first ratio obtained through calculation by each of the foregoing four AC-DC conversion modules is (80+100+120+80)/(100+150+150+100)=0.76. The AC-DC conversion module 111a₁ controls an output power of the AC-DC conversion module 111a₁ to be 100*0.76=76 kW, the AC-DC conversion module 111a₂ control an output power of the AC-DC conversion module 111a₂ to be 150*0.76=114 kW, the AC-DC conversion module 121d₁ controls an output power of the AC-DC conversion module 121d₁ to be 150*0.76=114 kW, and the AC-DC conversion module 121d₂ controls an output power of the AC-DC conversion module 121d₂ to be 100*0.76=76 kW.

It may be understood that the charging device 1 may enable an output power of each AC-DC conversion module to be proportionally output based on a rated power of each AC-DC conversion module in a proportional current equalization control manner of each AC-DC conversion module. This ensures that an AC-DC conversion module with a high rated power outputs a larger power, and an AC-DC conversion module with a low rated power outputs a smaller power, thereby prolonging a service life of each AC-DC conversion module and improving reliability of the charging device 1.

In addition, when a charging connector of the charging device 1 is connected to a to-be-charged vehicle, the charging device 1 controls, in a proportional allocation or on-demand allocation manner, an output power of a DC-DC conversion module connected to the to-be-charged vehicle, to ensure that when the charging device 1 charges the to-be-charged vehicle, a power input to a direct current bus BUS is always greater than or equal to a power output by the direct current bus BUS, thereby improving reliability of the charging device 1.

In an optional implementation, in response to the total rated power of all AC-DC conversion modules in the charging device 1 being less than or equal to a total charging power required by all to-be-charged vehicles connected to charging connectors in the charging device 1, a controller in each first charging cabinet controls an output power of one DC-DC conversion module corresponding to each first charging connector or a total output power of the plurality of DC-DC conversion modules to be a product of a charging power required by a to-be-charged vehicle connected to each first charging connector and a power attenuation coefficient. The first charging connector is a charging connector that is in each first charging cabinet and that is connected to the to-be-charged vehicle. The power attenuation coefficient is greater than a preset threshold and is less than or equal to a second ratio. The second ratio is a ratio of the total rated power of all the AC-DC conversion modules to the total charging power required by all the to-be-charged vehicles connected to the charging connectors. For example, the preset threshold is 0.

For example, assuming that the power attenuation coefficient is the second ratio, and only a charging connector 113c₁ and a charging connector 1N3f_{q} among all the charging connectors in the charging device 1 are connected to the to-be-charged vehicles, the charging connector 113c₁ corresponds to a DC-DC conversion module 112b₁ and a DC-DC conversion module 112b₃, and the charging connector 1N3f_{q} corresponds to a DC-DC conversion module 1N2eₚ. A charging power required by a to-be-charged vehicle connected to the charging connector 113c₁ is 400 kW, and a charging power required by a to-be-charged vehicle connected to the charging connector 1N3f_{q} is 300 kW. A total rated power of all the AC-DC conversion modules in the charging device 1 is 560 kW. Apparently, the total rated power 560 kW of all the AC-DC conversion modules in the charging device 1 is less than the total charging power of all the to-be-charged vehicles connected to the charging connectors in the charging device 1, that is, 400+300=700 kW. In this case, the second ratio obtained through calculation by a controller 114 in the first charging cabinet 11 and a controller 1N4 in a first charging cabinet 1N is 560/700=0.8, and the controller 114 controls a total output power of the DC-DC conversion module 112b₁ and the DC-DC conversion module 112b₃, that is, a sum of an output power of the DC-DC conversion module 112b₁ and an output power of the DC-DC conversion module 112b₃, to be a product of the charging power 400 kW required by the to-be-charged vehicle connected to the charging connector 113c₁ and the second ratio 0.8, that is, 320 kW. The controller 1N4 controls an output power of the DC-DC conversion module 1N2eₚ to be a product of the charging power 300 kW required by the to-be-charged vehicle connected to the charging connector 1N3f_{q} and the second ratio 0.8, that is, 240 kW.

It may be understood that, when a total rated power of all the AC-DC conversion modules in the charging device 1 is less than or equal to a total charging power of all to-be-charged vehicles connected to the charging connectors in the charging device 1, a proportional part of a charging power required by the to-be-charged vehicles is output to the to-be-charged vehicles connected to the charging connectors. This avoid a case in which an individual to-be-charged vehicle connected to the charging connector cannot be charged, thereby ensuring that each to-be-charged vehicle connected to the charging connector can be in a charging state, to improve charging experience of a user. In addition, the charging device 1 outputs, to each to-be-charged vehicle connected to the charging connector, a proportional part of a charging power required by the to-be-charged vehicle, so that it can be ensured that when the charging device 1 charges the to-be-charged vehicle, a power input to the direct current bus BUS is always greater than or equal to a power output by the direct current bus BUS, thereby further improving reliability of the charging device 1.

In another optional implementation, in response to the total rated power of all AC-DC conversion modules in the charging device 1 being greater than a total charging power required by all to-be-charged vehicles connected to charging connectors in the charging device 1, a controller in each first charging cabinet controls an output power of one DC-DC conversion module corresponding to each first charging connector or a total output power of the plurality of DC-DC conversion modules to be a charging power required by a to-be-charged vehicle connected to each first charging connector. The first charging connector is a charging connector that is in each first charging cabinet and that is connected to the to-be-charged vehicle.

For example, assuming that only a charging connector 113c₁ and a charging connector 1N3f_{q} among all the charging connectors in the charging device 1 are connected to the to-be-charged vehicles, the charging connector 113c₁ corresponds to a DC-DC conversion module 112b₁ and a DC-DC conversion module 112b₃, and the charging connector 1N3f_{q} corresponds to a DC-DC conversion module 1N2eₚ. A charging power required by a to-be-charged vehicle connected to the charging connector 113c₁ is 400 kW, and a charging power required by a to-be-charged vehicle connected to the charging connector 1N3f_{q} is 300 kW. A total rated power of all the AC-DC conversion modules in the charging device 1 is 800 kW. Apparently, the total rated power 800 kW of all the AC-DC conversion modules in the charging device 1 is greater than the total charging power of all the to-be-charged vehicles connected to the charging connectors in the charging device 1, that is, 400+300=700 kW. In this case, a controller 114 in the first charging cabinet 11 controls a total output power of the DC-DC conversion module 112b₁ and the DC-DC conversion module 112b₃, that is, a sum of an output power of the DC-DC conversion module 112b₁ and an output power of the DC-DC conversion module 112b₃, to be the charging power required by the to-be-charged vehicle connected to the charging connector 113c₁, that is, 400 kW. A controller 1N4 in a first charging cabinet 1N controls an output power of the DC-DC conversion module 1N2eₚ to be the charging power required by the to-be-charged vehicle connected to the charging connector 1N3f_{q}, that is, 300 kW.

It may be understood that, when a total rated power of all the AC-DC conversion modules in the charging device 1 is greater than a total charging power of all to-be-charged vehicles connected to the charging connectors in the charging device 1, a charging power required by each to-be-charged vehicle is output to each to-be-charged vehicle connected to the charging connector, so that efficiency of charging each to-be-charged vehicle by the charging device 1 can be effectively improved, thereby improving charging experience of the user. In addition, when the charging device 1 charges the to-be-charged vehicle, a power input to the direct current bus BUS is always greater than or equal to a power output by the direct current bus BUS, which can further improve reliability of the charging device 1.

In addition, a product of a total input power capacity of the charging device 1 and an actual operating efficiency of the charging device 1 is greater than or equal to a total output power of all charging connectors in the charging device 1. The total input power capacity of the charging device 1 is a smaller value between a sum of maximum input powers of all the AC-DC conversion modules in the charging device 1 and a total rated power of transformers connected to all the AC-DC conversion modules in the charging device 1. In this way, a total output power capacity of the charging device 1 (namely, a maximum total output power of the charging device 1) is greater than or equal to the total output power of all the charging connectors in the charging device 1. This can avoid a case in which the charging device 1 stops operating due to an inability to meet the total output power of all the charging connectors when the total output power of all the charging connectors in the charging device 1 is excessively large, thereby improving reliability of the charging device 1. The controller in each first charging cabinet is further configured to control a sum of input powers of all AC-DC conversion modules in its respective cabinet not to exceed a rated power of a transformer connected to the first charging cabinet in which the controller is located, to ensure that the transformer connected to each first charging cabinet does not operate beyond capacity, thereby improving reliability of the charging device 1.

In this embodiment of this application, the charging device 1 performs pooling on a power capability of the direct current bus BUS in a manner in which all AC-DC conversion modules in the N first charging cabinets share the direct current bus BUS with all DC-DC conversion modules. In this way, when different first charging cabinets in the charging device 1 have different input limited powers and/or different output powers, a power on the direct current bus BUS may be flexibly allocated across the entire charging device, which can not only meet the demand for higher power levels of the charging device 1, but also can maximize charging utilization of the charging device 1. In addition, the charging device 1 disposes a parallel communication line between the AC-DC conversion modules, to implement proportional current equalization control between the first power conversion modes, thereby improving efficiency of the charging device 1. When circuit topologies of the AC-DC conversion modules in the charging device 1 are of a non-isolated type, carrier synchronization lines or power-frequency synchronization lines are further disposed between the AC-DC conversion modules in the charging device 1, to implement functions such as high-frequency carrier synchronization, power-frequency phase detection and synchronization, and low-frequency circulating current control between the non-isolated AC-DC conversion modules in the charging device 1. This implements circulating current control between the N first charging cabinets, and reduces both high-frequency and low-frequency circulating currents between parallel machines, thereby improving efficiency, EMC, and reliability of the charging device. Further, when the charging device 1 charges the to-be-charged vehicle, a power input to the direct current bus BUS is always greater than or equal to a power output by the direct current bus BUS, which can further improve reliability of the charging device 1.

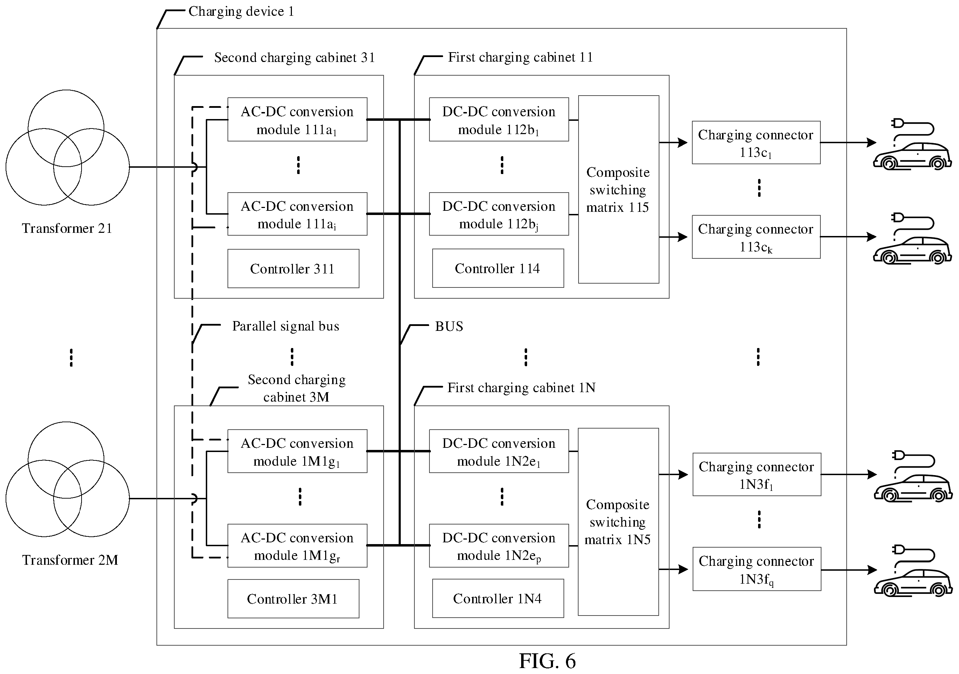

For example, FIG. 6 is a diagram of still another structure of the charging device according to this application. As shown in FIG. 6, in comparison with the charging device 1 shown in FIG. 2, Q AC-DC conversion modules in the charging device 1 shown in FIG. 6 are divided into M sets of AC-DC conversion modules, the charging device 1 further includes M second charging cabinets, and each of the M second charging cabinets includes one set of AC-DC conversion modules. Herein, both M and N are integers greater than 1, and a value relationship between M and N is not limited in this application. Specifically, as shown in FIG. 6, the charging device 1 further includes a second charging cabinet 31, ..., and a second charging cabinet 3M. The second charging cabinet 31 includes a first set of AC-DC conversion modules, ..., and the second charging cabinet 3M includes an M^{th} set of AC-DC conversion modules. The first set of AC-DC conversion modules includes an AC-DC conversion module 111a₁, ..., and an AC-DC conversion module 111aᵢ; ...; and the M^{th} set of AC-DC conversion modules includes an AC-DC conversion module 1M1g₁, ..., and an AC-DC conversion module 1M1gᵣ. Herein, both i and r are integers greater than 1, and a value relationship between i and r is not limited in this application.

Output ends of AC-DC conversion modules in the M second charging cabinets are all connected to a direct current bus BUS. Specifically, output ends of i AC-DC conversion modules in the second charging cabinet 31 are connected to the direct current bus BUS through an output end of the second charging cabinet 31; ...; and output ends of r AC-DC conversion modules in the second charging cabinet 3M are connected to the direct current bus BUS through an output end of the second charging cabinet 3M. Input ends of the i AC-DC conversion modules in the second charging cabinet 31 are connected to an output end of a transformer 21 through an input end of the second charging cabinet 31; ...; and input ends of the r AC-DC conversion modules in the second charging cabinet 3M are connected to an output end of a transformer 2M through an input end of the second charging cabinet 3M. The second charging cabinet 31 further includes a controller 311, ..., and the second charging cabinet 3M further includes a controller 3M1.

Input ends of DC-DC conversion modules in N first charging cabinets are all connected to the direct current bus BUS. Specifically, input ends of j DC-DC conversion modules in a first charging cabinet 11 are connected to the direct current bus BUS through an input end of the first charging cabinet 11; ...; and input ends of p DC-DC conversion modules in a first charging cabinet 1N are connected to the direct current bus BUS through an input end of the first charging cabinet 1N. Herein, for a connection relationship between DC-DC conversion modules and a composite switching matrix in each first charging cabinet, and a connection relationship between the N first charging cabinets and N sets of charging connectors, refer to descriptions of corresponding parts in the charging device 1 shown in FIG. 3. Details are not described herein again.

In addition, controllers in the N first charging cabinets and controllers in the M second charging cabinets establish a communication connection to each other in a wired manner (for example, a CAN bus) or a wireless manner (for example, 4G or Wi-Fi), to facilitate scheduling and control of a total input power and a total output power of the charging device 1.

Input ends of different second charging cabinets are connected to different transformers, and input ends of the different transformers are all connected to an alternating current grid. In addition, outputs of different transformers have a phase difference, and AC-DC conversion modules in the charging device 1 share a direct current bus BUS. Therefore, when circuit topologies of the AC-DC conversion modules in the charging device 1 are all of a non-isolated type and N wires of the different transformers are connected a common grounding network, a common-mode circulating current shown in FIG. 4 occurs. The common-mode circulating current includes a low-frequency circulating current or a high-frequency circulating current. Based on this, when the circuit topologies of the AC-DC conversion modules in the charging device 1 are all of the non-isolated type, the charging device 1 shown in FIG. 6 further provides a parallel signal bus, and each AC-DC conversion module in the charging device 1 is connected to the parallel signal bus. The parallel signal bus includes but is not limited to a signal line such as a carrier synchronization line or a power-frequency synchronization line. The carrier synchronization line is configured to transmit a control signal from a primary module in the Q AC-DC conversion modules, to cooperate to implement switching signal synchronization between the AC-DC conversion modules in the charging device 1, thereby implementing high-frequency circulating current control between different second charging cabinets. The power-frequency synchronization line is configured to transmit input voltage phase information of any AC-DC conversion module in the charging device 1. In addition, regardless of whether a circuit topology of each AC-DC conversion module is of an isolated type or of the non-isolated type, the parallel signal bus always includes a parallel communication line. The parallel communication line is configured to transmit a rated power or an actual output power of any AC-DC conversion module in the charging device 1, to implement proportional current equalization control between the AC-DC conversion modules in the charging device 1. It should be noted that, when the circuit topologies of the AC-DC conversion modules in the charging device 1 are all of the isolated type, no common-mode circulating current exists between different second charging cabinets. Therefore, when the circuit topologies of the AC-DC conversion modules in the charging device 1 are of the isolated type, no carrier synchronization line or power-frequency synchronization line may be disposed in the parallel signal bus.

In an implementation, a low-frequency circulating current control manner of the charging device 1 is as follows: After the charging device 1 operates, each AC-DC conversion module in the charging device 1 generates a modulation wave of the AC-DC conversion module based on an actual common-mode circulating current value of the AC-DC conversion module when a common-mode circulating current exists, to reduce the common-mode circulating current of the AC-DC conversion module. Because each AC-DC conversion module in the charging device 1 reduces the actual common-mode circulating current of the AC-DC conversion module in such a low-frequency circulating current control manner, a low-frequency circulating current between the M second charging cabinets may be reduced, to improve efficiency, EMC, and reliability of the charging device 1.

In an implementation, all AC-DC conversion modules in the charging device 1 include an AC-DC conversion module 1M1g₁ and other AC-DC conversion modules different from the AC-DC conversion module 1M1g₁. The AC-DC conversion module 1M1g₁ is a primary module of the AC-DC conversion module in the charging device 1. The other AC-DC conversion modules different from the AC-DC conversion module 1M1g₁ are secondary modules of the AC-DC conversion module 1M1g₁.

A high-frequency circulating current control manner of the charging device 1 is as follows: After the charging device 1 operates, the AC-DC conversion module 1M1g₁ sends a control signal of the AC-DC conversion module 1M1g₁ to each of the other AC-DC conversion modules by using a carrier synchronization line. Each of the other AC-DC conversion modules receives the control signal of the AC-DC conversion module 1M1g₁ by using the carrier synchronization line, and controls a control signal of each of the other AC-DC conversion module to be aligned with the control signal of the AC-DC conversion module 1M1g₁, to implement high-frequency circulating current control between different AC-DC conversion modules. Based on such a high-frequency circulating current control manner, the control signal of each of the other AC-DC conversion modules may be aligned with the control signal of the AC-DC conversion module 1M1g₁, to reduce a high-frequency circulating current between the N second charging cabinets, and improve efficiency, EMC, and reliability of the charging device 1.

In an implementation, a proportional current equalization control manner of each AC-DC conversion module in the charging device 1 is as follows: After the charging device 1 operates, each AC-DC conversion module in the charging device 1 obtains, by using the parallel communication line, rated powers and actual output powers of other AC-DC conversion module different from the AC-DC conversion module itself, and determines a ratio of an actual total output power to a total rated power of all AC-DC conversion modules in the charging device 1 as a first ratio, to control an output power of the AC-DC conversion module to be a product of a rated power of the AC-DC conversion module and the first ratio, thereby implementing proportional current equalization control on the AC-DC conversion modules. In this way, an output power of each AC-DC conversion module may be proportionally output based on a rated power of each AC-DC conversion module. This ensures that an AC-DC conversion module with a high rated power outputs a larger power, and an AC-DC conversion module with a low rated power outputs a smaller power, thereby prolonging a service life of each AC-DC conversion module and improving reliability of the charging device 1.

In addition, when a charging connector of the charging device 1 is connected to a to-be-charged vehicle, the charging device 1 controls, in a proportional allocation or on-demand allocation manner, an output power of a DC-DC conversion module connected to the to-be-charged vehicle, to ensure that when the charging device 1 charges the to-be-charged vehicle, a power input to a direct current bus BUS is always greater than or equal to a power output by the direct current bus BUS, thereby improving reliability of the charging device 1.

In an optional implementation, in response to the total rated power of all AC-DC conversion modules in the charging device 1 being less than or equal to a total charging power required by all to-be-charged vehicles connected to charging connectors in the charging device 1, a controller in each first charging cabinet controls an output power of one DC-DC conversion module corresponding to each first charging connector or a total output power of the plurality of DC-DC conversion modules to be a product of a charging power required by a to-be-charged vehicle connected to each first charging connector and a power attenuation coefficient. The first charging connector is a charging connector that is in each first charging cabinet and that is connected to the to-be-charged vehicle. The power attenuation coefficient is greater than a preset threshold and is less than or equal to a second ratio. The second ratio is a ratio of the total rated power of all the AC-DC conversion modules to the total charging power required by all the to-be-charged vehicles connected to the charging connectors.

It may be understood that, when a total rated power of all the AC-DC conversion modules in the charging device 1 is less than or equal to a total charging power of all to-be-charged vehicles connected to the charging connectors in the charging device 1, a proportional part of a charging power required by the to-be-charged vehicles is output to the to-be-charged vehicles connected to the charging connectors. This avoid a case in which an individual to-be-charged vehicle connected to the charging connector cannot be charged, thereby ensuring that each to-be-charged vehicle connected to the charging connector can be in a charging state, to improve charging experience of a user. In addition, the charging device 1 outputs, to each to-be-charged vehicle connected to the charging connector, a proportional part of a charging power required by the to-be-charged vehicle, so that it can be ensured that when the charging device 1 charges the to-be-charged vehicle, a power input to the direct current bus BUS is always greater than or equal to a power output by the direct current bus BUS, thereby further improving reliability of the charging device 1.

In another optional implementation, in response to the total rated power of all AC-DC conversion modules in the charging device 1 being greater than a total charging power required by all to-be-charged vehicles connected to charging connectors in the charging device 1, a controller in each first charging cabinet controls an output power of one DC-DC conversion module corresponding to each first charging connector or a total output power of the plurality of DC-DC conversion modules to be a charging power required by a to-be-charged vehicle connected to each first charging connector. The first charging connector is a charging connector that is in each first charging cabinet and that is connected to the to-be-charged vehicle.

It may be understood that, when a total rated power of all the AC-DC conversion modules in the charging device 1 is greater than a total charging power of all to-be-charged vehicles connected to the charging connectors in the charging device 1, a charging power required by each to-be-charged vehicle is output to each to-be-charged vehicle connected to the charging connector, so that efficiency of charging each to-be-charged vehicle by the charging device 1 can be effectively improved, thereby improving charging experience of the user. In addition, when the charging device 1 charges the to-be-charged vehicle, a power input to the direct current bus BUS is always greater than or equal to a power output by the direct current bus BUS, which can further improve reliability of the charging device 1.

Herein, for a low-frequency circulating current control manner and a high-frequency circulating current control manner of the charging device 1, a proportional current equalization control manner of each AC-DC conversion module, and a specific implementation process of controlling, in a proportional allocation or on-demand allocation manner, an output power of the DC-DC conversion module connected to the to-be-charged vehicle, refer to descriptions of corresponding parts in the charging device 1 shown in FIG. 3. Details are not described herein again.

In addition, a product of a total input power capacity of the charging device 1 and an actual operating efficiency of the charging device 1 is greater than or equal to a total output power of all charging connectors in the charging device 1. The total input power capacity of the charging device 1 is a smaller value between a sum of maximum input powers of all the AC-DC conversion modules in the charging device 1 and a total rated power of transformers connected to all the AC-DC conversion modules in the charging device 1. The controller in each second charging cabinet is further configured to control a sum of input powers of all AC-DC conversion modules in its respective cabinet not to exceed a rated power of a transformer connected to the second charging cabinet in which the controller is located, to ensure that the transformer connected to each second charging cabinet does not operate beyond capacity, thereby improving reliability of the charging device 1.

In this embodiment of this application, the charging device 1 performs pooling on a power capability of the direct current bus BUS in a manner in which all AC-DC conversion modules in the M second charging cabinets share the direct current bus BUS with all DC-DC conversion modules in the N first charging cabinets. In this way, when different second charging cabinets in the charging device 1 have different input limited powers and/or different output powers, a power on the direct current bus BUS may be flexibly allocated across the entire charging device, which can not only meet the demand for higher power levels of the charging device 1, but also can maximize charging utilization of the charging device 1. In addition, the charging device 1 disposes a parallel communication line between the AC-DC conversion modules, to implement proportional current equalization control between the first power conversion modes, thereby improving efficiency of the charging device 1. When circuit topologies of the AC-DC conversion modules in the charging device 1 are of a non-isolated type, carrier synchronization lines or power-frequency synchronization lines are further disposed between the AC-DC conversion modules in the charging device 1, to implement functions such as high-frequency carrier synchronization, power-frequency phase detection and synchronization, and low-frequency circulating current control between the non-isolated AC-DC conversion modules in the charging device 1. This implements circulating current control between the M second charging cabinets, and reduces both high-frequency and low-frequency circulating currents between parallel machines, thereby improving efficiency (by reducing losses), EMC, and reliability of the charging device 1. Further, when the charging device 1 charges the to-be-charged vehicle, a power input to the direct current bus BUS is always greater than or equal to a power output by the direct current bus BUS, which can further improve reliability of the charging device 1.

It should be noted that, in the foregoing embodiment, a specific AC-DC conversion module in the charging device 1 obtains control signals, rated powers, actual output powers, or input voltage phase information of other AC-DC conversion modules different from the AC-DC conversion module by using the parallel signal bus. In other words, the foregoing data is obtained in a wired communication manner. Optionally, the foregoing data may be obtained in a wireless communication manner.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging device, comprising a plurality of first charging cabinets, a plurality of AC-DC conversion modules, a direct current bus, and a plurality of sets of charging connectors, and each of the plurality of first charging cabinets comprises one set of DC-DC conversion modules, wherein
an input end of each of the plurality of AC-DC conversion modules is configured to connect to an output end of a transformer, and both an output end of each AC-DC conversion module and an input end of each DC-DC conversion module in the set of DC-DC conversion modules are connected to the direct current bus; and
output ends of the set of DC-DC conversion modules are connected to one of the plurality of sets of charging connectors, and each of the plurality of sets of charging connectors is configured to connect to a to-be-charged vehicle.

2. The charging device according to claim 1, wherein the AC-DC conversion module is configured to: when there is a common-mode circulating current in the AC-DC conversion module, generate a modulation wave of the AC-DC conversion module based on an actual common-mode circulating current value of the AC-DC conversion module, to reduce the common-mode circulating current of the AC-DC conversion module, wherein the modulation wave is used to control a switching transistor in the AC-DC conversion module to be turned on or turned off.

3. The charging device according to claim 1 or 2, wherein the plurality of AC-DC conversion modules comprise an AC-DC conversion module i;
the AC-DC conversion module i is configured to send a control signal of the AC-DC conversion module i to other AC-DC conversion modules different from the AC-DC conversion module i in the plurality of AC-DC conversion modules; and
each of the other AC-DC conversion modules is configured to: receive the control signal of the AC-DC conversion module i, and control a control signal of each of the other AC-DC conversion modules to be aligned with the control signal of the AC-DC conversion module i.

4. The charging device according to any one of claims 1 to 3, wherein the AC-DC conversion module is configured to control a ratio of an output power to a rated power of the AC-DC conversion module to be a first ratio, wherein the first ratio is a ratio of an actual total output power to a total rated power of the plurality of AC-DC conversion modules.

5. The charging device according to any one of claims 1 to 4, wherein a product of a total input power capacity of the charging device and an actual operating efficiency of the charging device is greater than or equal to a total output power of the plurality of sets of charging connectors, wherein the total input power capacity of the charging device is a smaller value between a sum of maximum input powers of the plurality of AC-DC conversion modules and a total rated power of transformers connected to the plurality of AC-DC conversion modules, and the actual operating efficiency of the charging device is a ratio of the total output power of the plurality of sets of charging connectors to a total input power of the charging device.

6. The charging device according to any one of claims 3 to 5, wherein the charging device further comprises a parallel communication line, each AC-DC conversion module is connected to the parallel communication line, and the parallel communication line is configured to transmit a rated power or an actual output power of any AC-DC conversion module in the plurality of AC-DC conversion modules.

7. The charging device according to claim 6, wherein the charging device further comprises a carrier synchronization line or a power-frequency synchronization line, each AC-DC conversion module is connected to the carrier synchronization line or the power-frequency synchronization line, the carrier synchronization line is configured to transmit the control signal of the AC-DC conversion module i, and the power-frequency synchronization line is configured to transmit input voltage phase information of the any AC-DC conversion module.

8. The charging device according to any one of claims 1 to 7, wherein the plurality of AC-DC conversion modules comprise N sets of AC-DC conversion modules, a quantity of the plurality of first charging cabinets is N, and each first charging cabinet further comprises one set of AC-DC conversion modules.

9. The charging device according to any one of claims 1 to 7, wherein the plurality of AC-DC conversion modules comprise M sets of AC-DC conversion modules, the charging device further comprises the M second charging cabinets, and each of the M second charging cabinets comprises one set of AC-DC conversion modules.

10. The charging device according to claim 8 or 9, wherein each first charging cabinet further comprises a controller, one set of charging connectors connected to each first charging cabinet comprises a plurality of charging connectors, and one set of DC-DC conversion modules in each first charging cabinet comprises a plurality of DC-DC conversion modules; and
the controller is configured to: in response to the total rated power of the plurality of AC-DC conversion modules being less than or equal to a total charging power required by to-be-charged vehicles connected to the plurality of charging connectors, control an output power of one DC-DC conversion module corresponding to each first charging connector or a total output power of the plurality of DC-DC conversion modules to be a product of a charging power required by a to-be-charged vehicle connected to each first charging connector and a power attenuation coefficient, wherein the first charging connector is a charging connector that is in the plurality of charging connectors and that is connected to the to-be-charged vehicle, and the power attenuation coefficient is less than or equal to a ratio of the total rated power to the total charging power.
